# EUROPÄISCHE PATENTANMELDUNG

(11) **EP 0 899 982 A2**
(43) Veröffentlichungstag der Anmeldung: **03.03.1999**
(21) Anmeldenummer: 98115273.9
(22) Anmeldetag: 13.08.1998
(51) Int. Cl.: H04Q 11/04

(54) **Verfahren, System und Vorrichtungen zur Funkanbindung mehrerer Endgeräte über eine Basisstation an eine Schnittstelle eines Telefon- oder Datennetzes**

(30) Priorität: 14.08.1997 DE 19735384
(71) Anmelder: Dosch & Amand GmbH & Co. KG, 81927 München (DE)
(72) Erfinder: Gloger, Marcus G., Dipl.-Ing. (Univ.), 81735 München (DE)
(74) Vertreter: Grünecker, Kinkeldey, Stockmair & Schwanhäusser Anwaltssozietät

(57) **Zusammenfassung**

Verfahren zur drahtlosen Anbindung über Funk von mehreren Endgeräten (PP), von denen mindestens eines eine Computereinrichtung ist, über eine Basisstation (FP) an eine digitale Schnittstelle (BRA/BPA) eines Telefon- oder Datennetzes, wobei die Schnittstelle des Telefon- oder Datennetzes in der Basisstation (FP) vollständig terminiert wird, und die Funkschnittstelle zwischen der mindestens einen Computereinrichtung und der Basisstation eine Vielzahl von Kanälen aufweist.

## Beschreibung

Die vorliegende Erfindung betrifft ein Verfahren, ein System und Vorrichtungen zur Funkanbindung mehrerer Endgeräte über eine Basisstation an eine Schnittstelle eines Telefon- oder Datennetz, wobei mindestens ein Endgerät ein Computer ist.

Das zunehmend Verbreitung findende ISDN (Integrated Services Digital Network) ist definiert durch mehrere internationale digitale Kommunikationsstandards, die weltweit von Telefongesellschaften anerkannt werden. Die ISDN-Technologie wird benutzt, um Sprache oder Daten, die Graphiken, Töne und Filme umfassen können, als digitale Signale über öffentliche Fernmeldenetze zu senden. ISDN umfaßt digitale Standardübertragungsprotokolle, Anschlüsse und Verbindungskabel. Dem Benutzer stehen zwei Arten von ISDN-Anschlüssen zur Verfügung. Der Basisanschluß (S₀) umfaßt zwei B - Kanäle mit je 64 KBit/s und einen D-Kanal mit 16 KBit/s. Die B - Kanäle übertragen die Nutzinformation. Der D-Kanal wird für die Signalisierung verwendet. Neben dem Basisanschluß (S₀) steht der Primärmultiplexanschluß (S_{2M}) zur Verfügung, der 30 B - Kanäle und einen D-Kanal mit 64 KBit/s umfaßt.

Zum Anschluß von Computern, sowohl an den ISDN-Basisanschluß als auch an den ISDN-Primärmultiplexanschluß stehen eine umfangreiche Auswahl an Einsteckkarten zur Verfügung. Um die Entwicklung von Anwendungsprogrammen für ISDN-Dienste zu vereinheitlichen, wurde 1990 die Softwareschnittstelle COMMON-ISDN-API-Version 1.1 (CAPI 1.1) definiert. Diese Softwareschnittstelle wurde mit der Version 2.0 an die aktuellen Erfordernisse angepaßt. CAPI 2.0 bietet einen einheitlichen Zugriff auf die verschiedenen ISDN-Dienste, wie Telefon, Fax, Daten-, Sprach-, und Videoübertragung. CAPI unterstützt einen oder mehrere Basis- und Primärmultiplexanschlüsse auf einer oder mehrerer ISDN-Schnittstellenkarten. Ferner wird die gleichzeitige Ausführung mehrerer Programme unterstützt. CAPI kann herstellerspezifisch erweitert werden.

Der DECT-Standard (Digital European Cordless Telecommunication) wurde Mitte der 80 er Jahre als europäischer Standard für private schnurlose Telefone entwickelt. 1992 wurde der DECT-Standard endgültig festgelegt und vom European Telecommunications Standards Institute (ETSI) veröffentlicht. Seit 1993 ist DECT der in der europäischen Union vorgeschriebene Standard. Die Mitgliedsstaaten haben das Frequenzband von 1,88 bis 1,9 GHz für DECT - Systeme reserviert. Der DECT-Standard basiert auf einer Vielträger - TDMA - Technologie (time division multiple access). Auf zehn Trägern stehen 24 Zeitschlitze, also 240 Kanäle mit einer Übertragungsrate von je 32 KBit/s zur Verfügung. Der Standard spezifiziert vier Schichten, die in etwa den Schichten 1 bis 3 des OSI - Schichtenmodells (open systems interconnection) entsprechen. Diese Schichten sind wie folgt definiert:
1. Physical Layer (PHL): Diese Schicht definiert die Funkparameter, wie Frequenz, Zeitschlitz: und Sendeleistung.
2. Medium Access Control Layer (MAC): Diese Schicht definiert, wie die Verbindungen zwischen Mobil - und Basisstationen des DECT - Systems auf - und abgebaut werden.
3. Data Link Control Layer (DLC): Diese Schicht stellt dem Network Layer gesicherte Verbindungen zur Sprach- und Datenübertragung zur Verfügung.
4. Network layer (NWK): Diese Schicht definiert den Nachrichtenaustausch, der für den Aufbau, das Halten und den Abbau von Verbindungen zwischen Mobil - und Basisstationen des Netzwerks benötigt wird.

Zur Anbindung von DECT - Systemen an ISDN wurden bereits zwei internationale Standards, nämlich IAP (DECT ISDN End System Configuration ETS 300 434) und IIP (DECT ISDN Intermediate System Configuration ETS 300 xxx) definiert.

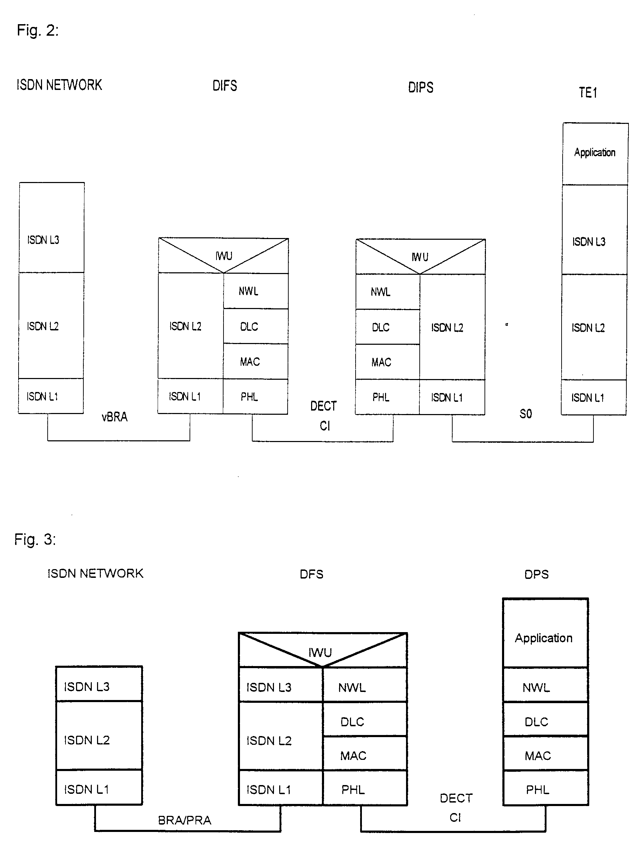

IIP definiert ein System, bei dem die ISDN - Protokolldateneinheiten (PDU) von der DECT - Basisstation über die Luftschnittstelle an die Mobilstationen weitergegeben werden. In der Basisstation werden die ISDN PDUs lediglich überwacht, um dadurch den Verbindungsaufbau des DECT - Systems steuern zu können. Damit steht auf der Seite der Mobilstation eine physikalische ISDN-Schnittstelle zur Verfügung. Der Nachteil dieses Systems liegt darin, daß in jeder Mobilstation Hardware und Software für die Terminierung des Signalisierungskanals vorgesehen werden muß. Die Protokollstacks gemäß dem IIP - Standard sind schematisch in Fig. 2 dargestellt.

Der IAP - Standard definiert eine vollständige Abbildung von ISDN- auf DECT - Nachrichten und - Prozeduren hinsichtlich der Steuerkanäle. Das bedeutet, daß B - Kanal - Protokolle nicht terminiert werden und damit der volle 64 KBit/s - Datenstrom über die Luftschnittstelle übertragen wird und wiederum in jeder Mobilstation die entsprechende Hard- und Software vorhanden sein muß. Die Protokollstacks gemäß dem IAP - Standard sind in Fig. 3 schematisch dargestellt.

Nachteilig an dem IIP- und dem IAP - Standard ist somit der komplexe Hard - und Softwareaufwand.

Es ist die Aufgabe der vorliegenden Erfindung, eine drahtlose Anbindung von Endgeräten an eine digitale Schnittstelle eines Telefon - oder Datennetzes, vorzugsweise eine Anbindung von DECT - Systemen an ISDN, mit reduziertem Hard - und Softwareaufwand zur Verfügung zu stellen.

Diese Aufgabe wird gelöst durch ein Verfahren zur drahtlosen Anbindung über Funk von mehreren Endgeräten (PP), von denen mindestens eines eine Computereinrichtung ist, über eine Basisstation (FP) an eine digitale Schnittstelle (BRA/BPA) eines Telefon- oder Datennetzes, wobei die Schnittstelle des Telefon- oder Datennetzes in der Basisstation (FP) vollständig terminiert wird, und die Funkschnittstelle zwischen der mindestens einen Computereinrichtung und der Basisstation eine Vielzahl von Kanälen aufweist.

Ferner wird diese Aufgabe gelöst durch eine Basisstation (FP) zur drahtlosen Anbindung über Funk von mehreren Endgeräten (PP), von denen mindestens eines, eine Computereinrichtung ist, an eine Schnittstelle (BRA/BPA) eines Telefon- oder Datennetzes, wobei die Basisstation eine Schnittstelle zu dem Telefon- oder Datennetz, sowie eine Funkschnittstelle zu den mehreren Endgeräten umfaßt, wobei die Schnittstelle des Telefon- oder Datennetzes in der Basisstation (FP) vollständig terminiert wird, und wobei die Funkschnittstelle zwischen der mindestens einen Computereinrichtung und der Basisstation eine Vielzahl von Kanälen aufweist.

Ferner wird diese Aufgabe gelöst durch eine PCMCIA - Karte mit Treibersoftware zur Funkanbindung gemäß DECT - Standard einer Computereinrichtung (PP) über eine Basisstation (FP) an eine ISDN - Schnittstelle, wobei die PCMCIA - Karte Einrichtungen zur Funkkommunikation mit der Basisstation sowie zumindest die DECT - spezifische PHL - und MAC - Schicht zur entsprechenden teilweisen Terminierung des DECT - Protokoll - Stacks aufweist, und wobei die Treibersoftware die nicht in der PCMCIA - Karte terminierten Schichten, vorzugsweise die DLC - und die NWK - Schicht, zur entsprechenden vollständigen Terminierung des DECT - Protokoll - Stacks umfaßt, wobei weder PCMCIA - Karte noch Treibersoftware Mittel zur Terminierung des B - Kanals der ISDN - Schnittstelle aufweisen, wobei die Treibersoftware ferner eine Standardprogrammierschnittstelle für die DECT - Funkschnittstelle (DAPI), sowie eine CAPI CLIENT - Schicht und eine Standardprogrammierschnittstelle (CAPI 2.0) für ISDN - Schnittstellen umfaßt, wobei die CAPI CLIENT - Schicht die Kommunikation mit der Basisstation verwaltet und zur Kommunikation mit einer entsprechenden CAPI SERVER - Schicht in der Basisstation dient, die selbst mehrere Endgeräte verwalten kann.

Ferner wird diese Aufgabe gelöst durch ein System zur drahtlosen Anbindung über Funk von mehreren Endgeräten (PP), von denen mindestens eines eine Computereinrichtung ist, über eine Basisstation (FP) an eine digitale Schnittstelle (BRA/BPA) eines Telefon- oder Datennetzes, wobei Einrichtungen vorgesehen sind, um die Schnittstelle des Telefon- oder Datennetzes in der Basisstation (FP) vollständig zu terminieren, und die Funkschnittstelle zwischen der mindestens einen Computereinrichtung und der Basisstation eine Vielzahl von Kanälen aufweist.

Bevorzugte Ausgestaltungen der vorliegenden Erfindung sind Gegenstände der Unteransprüche.

Im folgenden wird eine bevorzugte Ausführungsform der vorliegenden Erfindung unter Bezugnahme auf die beiliegenden Zeichnungen näher erläutert. Dabei zeigen:
- Fig. 1: ein schnurloses Netzwerk, bestehend aus zwei feststehenden, zwei tragbaren Computern und einer Basisstation, über die die Computer an ein ISDN - Netzwerk angeschlossen werden,
- Fig. 2: eine Protokollarchitektur gemäß dem IIP - Standard für die Verbindung von der Basisstation (DIFS) zu einer Mobilstation (DIPS) über eine schnurlose DECT - Schnittstelle,
- Fig. 3: eine Protokollarchitektur gemäß dem IAP - Standard, bei dem eine Mobilstation (DPS) über eine schnurlose DECT - Schnittstelle mit einer Basisstation (DFS) verbunden wird und über diese an ein ISDN - Netzwerk angeschlossen wird,
- Fig. 4: eine Protokollarchitektur gemäß einer bevorzugten Ausführungsform der Erfindung, wobei eine Mobilstation (PP) über eine schnurlose DECT - Schnittstelle mit einer Basisstation (FP) verbunden wird und an ein ISDN - Netzwerk angeschlossen wird,
- Fig. 5: eine Protokollarchitektur gemäß einer bevorzugten Ausführungsform der vorliegenden Erfindung, wobei die Kommunikation zwischen zwei Mobilstationen (PP) erfolgt, und
- Fig. 6: eine Protokollarchitektur gemäß einer bevorzugten Ausführungsform der vorliegenden Erfindung, wobei die Kommunikation zwischen zwei Mobilstationen unter Zwischenschaltung der Basisstation erfolgt.

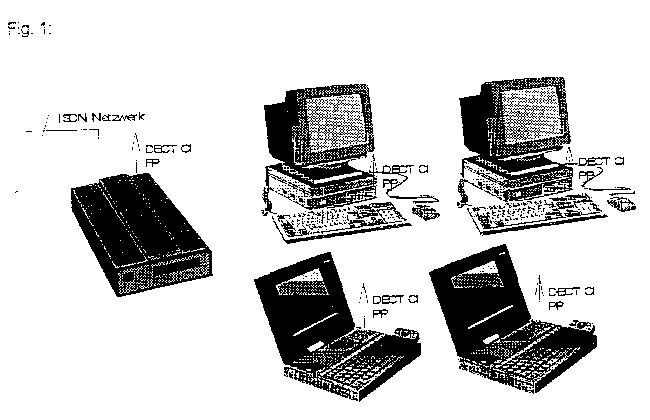

Fig. 1 zeigt die bevorzugte Ausführungsform eines erfindungsgemäßen, drahtlosen Computernetzes. Vier Computer (PP, portable part), von denen in Fig. 1 zwei als Laptops und zwei als PCs dargestellt sind, stehen über eine Funkschnittstelle mit einer Basisstation (FP, fixed part) in Verbindung. Die Computer werden aufgrund der drahtlosen Anbindung auch als Mobilstationen bezeichnet. Die Basisstation bietet den Computern Zugang zu einem digitalen Telefon- oder Datennetz, vorzugsweise einem ISDN - Netz. Die Funkschnittstelle entspricht vorzugsweise dem DECT - Standard. Um die Computer um eine Funkschnittstelle zu erweitern, werden vorzugsweise Einsteckkarten verwendet. Für Laptops eignen sich insbesondere PCMCIA - Karten, da die Mehrzahl der Laptops zwei PCMCIA - Einsteckplätze aufweisen. Wegen der kompakten Bauweise finden insbesondere PCMCIA - Karten mit direkt angeschlossener Antenne Verwendung. Diese PCMCIA - Karten benötigen somit keine über Kabel angeschlossenen externen Funkeinheiten.

Vorzugsweise werden an die Basisstation mehrere Computer beispielsweise die eines gesamten Büros angeschlossen. Die begrenzte Reichweite der DECT - Funkverbindungen und die benötigte Bandbreite bestimmen letztlich die obere Grenze der angeschlossenen Computer. Dabei kann die Basisstation selbst ein Computer sein, der einen ISDN - Anschluß und eine DECT - PCMCIA - Karte umfaßt, und auf dem die CAPI - SERVER - Software läuft.

Eine andere bevorzugte Verwendung der vorliegenden Erfindung liegt im SOHO - Bereich (Small Office, Home Office). Hier werden vorzugsweise ein bis etwa fünf Telefone, ein oder mehrere Computer, ein Fax, ein Anrufbeantworter und ein Drucker drahtlos untereinander und über die Basisstation an das ISDN - Netz angeschlossen. Für das Anbinden von anderen Endgeräten als Computern werden die CAPI SERVER- und die DAPI-Schicht erweitert und angepaßt.

Da bei Online - Sitzungen die Nutzdatenströme stark schwankend und unsymmetrisch sind, wird bei der bevorzugten Ausführungsform der vorliegenden Erfindung die zur Verfügung gestellte Bandbreite durch Kanalbündelung an die augenblicklich benötigten Übertragungsraten angepaßt. Dies ist eine weiterer Vorteil gegenüber dem IAP- und IIP-Standard. Nur durch die intelligente Verteilung der zur Verfügung stehenden Bandbreite ist es möglich eine große Zahl von Computern gleichzeitig an einer Basisstation zu betreiben.

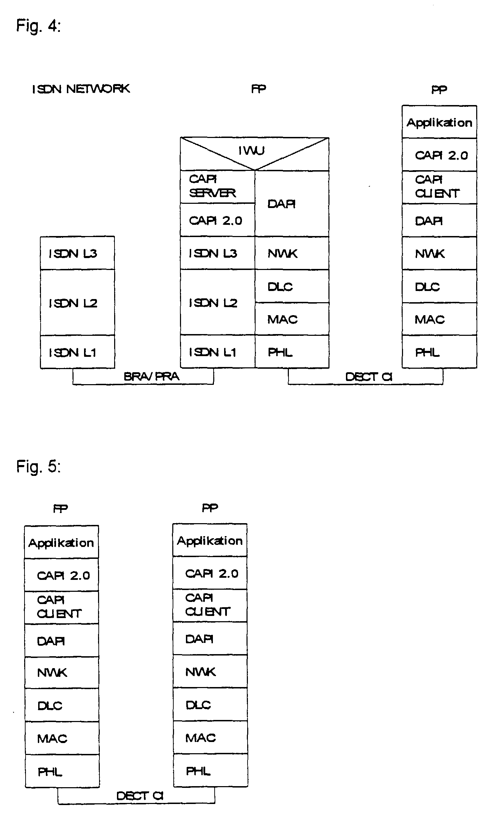

Im folgenden wird die Protokollarchitektur einer bevorzugten Ausführungsform gemäß der vorliegenden Erfindung anhand von Fig. 4 erläutert. Diese Protokollstruktur erlaubt einer Vielzahl von Mobilstationen einen drahtlosen Zugriff über eine HF - Schnittstelle nach dem DECT - Standard (ETS 300 175-x) auf ein Telekommunikationsnetz nach dem ISDN - Standard. Das System umfaßt eine Basisstation (FP, fixed part) mit einem physikalischen Anschluß nach dem ISDN - Standard. In der Basisstation sind neben den notwendigen Chipsätzen (z.B. HSCX-TE, PSB21525 von Siemens) auch alle notwendigen Software - Elemente untergebracht, um den ISDN - Protokoll - Stack vollständig bezüglich sowohl D - Kanal als auch B - Kanal zu terminieren.

Auf den ISDN - Protokoll - Stack in der Basisstation (FP), der die ISDN-Schichten L1, L2 und L3 umfaßt, ist eine Standard ISDN - Programmierschnittstelle, vorzugsweise nach dem CAPI 2.0 - Standard, aufgesetzt. Die auf die Standard - ISDN - Programmierschnittstelle folgende Anwendung wird als CAPI SERVER bezeichnet. Der CAPI SERVER erlaubt mehreren drahtlos über die DECT HF - Schnittstelle angeschlossenen Mobilstationen Zugriff auf das ISDN - Telekommunikationsnetzwerk. Die Interworking Unit (IWU) ist für den Datenaustausch zwischen CAPI SERVER und DAPI verantwortlich. Die DAPI - Schicht formt die Daten so um, daß sie über eine DECT - Schnittstelle gesendet bzw. empfangen werden können. Die Daten durchwandern dann den DECT - Protokoll - Stack, der aus der NWK-, DLC-, MAC- und PHL - Schicht besteht und werden über die DECT - Schnittstelle gesendet. Im jeweiligen Empfänger durchwandern die Daten den DECT - Protokoll - Stack in umgekehrter Richtung.

Auch in der Mobilstation (PP) ist über den DECT - Protokoll - Stack eine DAPI - Schicht angeordnet. Auf die DAPI - Schicht folgt der CAPI CLIENT. Der CAPI CLIENT in der Mobilstation entspricht dem CAPI SERVER in der Basisstation. Auf den CAPI CLIENT ist eine CAPI 2.0 - Schnittstelle aufgesetzt. So können in den Mobilstationen Software-Anwendungen ebenfalls auf eine standardisierte ISDN - Schnittstelle, vorzugsweise eine CAPI 2.0 - Schnittstelle, zugreifen. Auf diese Weise ist die drahtlose DECT - Schnittstelle für Software-Anwendungen (Applikation) in den Mobilstationen vollständig transparent. Da die Software-Anwendungen keinen Unterschied zwischen einer abgesetzten Realisierung der Programmierschnittstelle oder einem direkten ISDN-Zugriff nicht unterscheiden können, lassen sich beliebige Software-Anwendungen für standardisierte ISDN - Programmierschnittstellen verwenden. Diese in Fig. 4 dargestellte Architektur läßt sich als abgesetzten Prozeduraufruf RPC (remote procedure call) bezeichnen. Von den für die Mobilstation dargestellten Protokollschichten können zumindest die Schichten PHL, MAC hardwaremäßig in einer PCMCIA - Einsteckkarte untergebracht sein. Auch sind Lösungen denkbar, bei denen weitere Schichten, nämlich DLC, NWK und DAPI, bis hin zu der CAPI CLIENT - Schicht in der PCMCIA - Karte untergebracht sind.

Der Vorteil der in Fig. 4 dargestellten Protokollarchitektur liegt darin, daß keine ISDN - spezifische Hard - oder Software - Elemente in den Mobilstationen notwendig sind, da eine Terminierung des B - Kanals vollständig in der Basisstation erfolgt. Dadurch wird die Realisierung eines derartigen Systems vereinfacht sowie die Kosten für das System reduziert. Die in Fig. 4 dargestellte Protokollarchitektur erlaubt eine einfache Anbindung von schnurlosen Telefonen nach dem GAP - Profil (generic access profile ETS 300 344). Die schnurlosen Telefone werden dann nach dem DECT ISDN End System Configuration Profile (IAP, ETS 300 434) an ISDN angebunden. Da die vorzugsweise verwendete Standard - ISDN - Schnittstelle CAPI 2.0 Sprachübertragung über verschiedene B - Kanalprotokolle für Sprachübertragung durch einen bittransparenten Modus unterstützt, kann der Programmieraufwand in der CAPI SERVER - und DAPI - Schicht auf ein Mindestmaß begrenzt werden.

Die der bevorzugten Ausführungsform zugrundeliegende Gesamtarchitektur basiert auf einem Profil des DECT - Standards, das an die DECT - Data Profiles angelehnt ist. Dieses Profil erlaubt die dynamische Konfiguration der Verbindungen hinsichtlich Symmetrie und Bandbreite in Abhängigkeit von der tatsächlich vom Nutzdatenkanal benötigten Bandbreite. Diese Adaption der Bandbreite wird nur durch die Terminierung des B - Kanal - Protokoll - Stacks in der Basisstation ermöglicht. Die Anpassung der Bandbreite wird durch Kanalbündelung erreicht. Ein Kanal stellt dabei die kleinste Einheit dar, mit der Verbindung modifiziert werden können.

Software-Anwendungen geben beim Verbindungsaufbau bzw. einer Verbindungsmodifikation an, wie viele Kanäle mindestens benötigt werden und wie viele Kanäle idealerweise zur Verfügung gestellt werden sollten. Diese Kanalanforderungen erfolgen nach Uplink (Verbindung von der Mobilstation zur Basisstation) und Downlink (von der Basisstation zur Mobilstation) getrennt. Die Zahl der angeforderten Kanäle wird von der NWK - Schicht an die DLC - Schicht und die MAC - Schicht weitergegeben. Dieses Verfahren ist im DECT - Standard spezifiziert. Die weitere Vorgehensweise in der DLC - Schicht und der MAC - Schicht ist im DECT - Standard nicht beschrieben. Bei der bevorzugten Ausführungsform der vorliegenden Erfindung legt die DLC - Schicht Führungsgrößen für die Bandbreite nach Uplink und Downlink getrennt fest. Bei der Festlegung der Führungsgrößen wird die von der Applikation zur Übertragung bereitgestellte Datenmenge berücksichtigt.

Diese Führungsgrößen werden zyklisch in der Basisstation gesammelt und es wird in Abhängigkeit von den zu diesem Moment von der Basisstation für die entsprechende Applikation reservierbaren Ressourcen die Zahl der aktuellen Kanäle festgelegt. Die Verbindungsmodifikation wird dann von der MAC - Schicht in der Mobilstation durchgeführt. Die DAPI - Schichten in Fig. 4 stellen ebenfalls standardisierte Softwareschnittstellen dar, die dem CAPI 2.0 - Standard nachempfunden sind. Ähnlich wie der CAPI 2.0 - Standard eine standardisierte Software-Schnittstelle für ISDN - Anschlüsse darstellt, so stellt DAPI (DECT Application Programming Interface) eine standardisierte Schnittstelle für ein DECT - Übertragungssystem dar. Durch das DAPI wird die Software - Entwicklung für DECT - Systeme vereinfacht. Die DAPI - Schnittstelle soll auch anderen Software - Entwicklern zur Verfügung gestellt werden.

In der bevorzugten Ausführungsform der DAPI - Schicht wird eine fortlaufende Datenkompression, vorzugsweise nach dem ITU - T - Standard V.42bis, durchgeführt. Diese Form der Datenkompression wird auch beim Internet - Zugang über GSM - Mobiltelefone verwendet. In der bevorzugten Ausführungsform der DAPI - Schicht wird ferner eine virtuelle, parallele Druckerschnittstelle, eine virtuelle, serielle Schnittstelle und eine virtuelle TCP/IP - Schnittstelle implementiert.

In einer anderen bevorzugten Ausführungsform kann die digitale ISDN - Schnittstelle zwischen Basisstation und Telefonnetz durch eine analoge Schnittstelle, vorzugsweise einen ab - Anschluß ersetzt werden. In dieser bevorzugten Ausführungsform wird anstelle eines ISDN - Chipsatzes ein Modem - Chipsatz verwendet. In Fig. 4 wäre dazu der ISDN - Protokoll - Stack, der die Schichten ISDN L1, ISDN L2 und ISDN L3 umfaßt, durch einen Modem - Stack zu ersetzen. Ferner müßten die CAPI 2.0 - Programmierschnittstelle sowie die CAPI CLIENT - und die CAPI SERVER - Schichten entsprechend durch eine AT - Hayes - kompatible Schnittstelle sowie MODEM CLIENT bzw. MODEM SERVER - Schichten ersetzt werden.

Die bevorzugte Ausführungsform der DAPI - Schicht ermöglicht ferner interne Verbindungen von Mobilstation zu Mobilstation (Fig. 5). Da der DECT - Standard eine direkte Verbindung von Mobilstation zu Mobilstation nicht zuläßt, muß eine Mobilstation als Basisstation umkonfiguriert werden oder gleichzeitig als Mobil - und Basisstation konfiguriert werden. Diesen Umweg läßt der DECT - Standard zu. Dieses Umkonfigurieren wird von der CAPI CLIENT - Schicht veranlaßt, so daß man davon sprechen kann, daß die CAPI CLIENT - Schicht eine Serverfunktionalität umfaßt. Die Verbindung wird dann über dem internen DAPI - Dienst zur Verfügung gestellt. Die CAPI - CLIENT - Schicht unterscheidet, ob eine Verbindung zur ISDN - Schnittstelle oder zu einer Mobilstation aufgebaut wird. Falls eine Verbindung zwischen zwei Mobilstation aufgebaut werden soll, wird die Verbindung dann als interne DAPI - Verbindung aufgebaut.

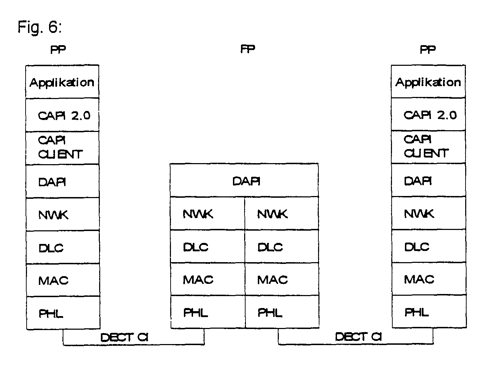

In einer weiteren Ausführungsform der vorliegenden Erfindung werden zusätzlich Verbindungen von Mobilstation zu Mobilstation über die Basisstation ermöglicht (Fig. 6). In dieser Ausführungsform umfaßt die Funktionalität der CAPI - CLIENT - Schicht vorzugsweise keine zusätzliche Serverfunktionalität. Bei dieser Ausführungsform entscheidet die CAPI - SERVER - Schicht, ob die Verbindung intern oder extern aufgebaut werden soll. Die Verbindung wird dann in der Basisstation über die NWK - Schicht zu der CAPI - CLIENT - Schicht in der angewählten Mobilstation über eine externe DAPI - Verbindung hergestellt. Der Nachteil dieser Ausführungsform besteht darin, daß durch die Übertragung von der Mobilstation zur Basisstation und zu einer weiteren Mobilstation die doppelte Bandbreite gegenüber einer direkten Übertragung von Mobilstation zu Mobilstation benötigt wird. Dadurch wird das drahtlose Kommunikationsnetzwerk stärker belastet.

## Patentansprüche

1. Verfahren zur drahtlosen Anbindung über Funk von mehreren Endgeräten (PP), von denen mindestens eines eine Computereinrichtung ist, über eine Basisstation (FP) an eine digitale Schnittstelle (BRA/BPA) eines Telefon- oder Datennetzes, **dadurch gekennzeichnet, daß**
die Schnittstelle des Telefon- oder Datennetzes in der Basisstation (FP) vollständig terminiert wird, und
die Funkschnittstelle zwischen der mindestens einen Computereinrichtung und der Basisstation eine Vielzahl von Kanälen aufweist.

2. Verfahren nach Anspruch 1, **dadurch gekennzeichnet, daß** das Telefon- oder Datennetz dem ISDN - Standard (Integrated Services Digital Network) entspricht, wobei die ISDN - Schnittstelle eine S₀-, S_{2M}-, Uₚ₀-, U₂₀₀-, U_{A}- oder eine Uₖ₀ - Schnittstelle ist, wobei auf den ISDN - Protokoll - Stack (ISDN L1, ISDN L2, ISDN L3) eine Standardprogrammierschnittstelle gemäß dem CAPI-Standard folgt und die gleiche Standardprogrammierschnittstelle in der mindestens einen Computereinrichtung zur Verfügung gestellt wird, so daß die Funkschnittstelle für die Softwareanwendungen transparent erscheint.

3. Verfahren nach Anspruch 1 oder 2, **dadurch gekennzeichnet, daß** die Funkschnittstelle dem DECT - Standard entspricht, auf den DECT - Protokoll - Stack (PHL, MAC, DLC, NWK) eine weitere Standardprogrammierschnittstelle (DAPI) folgt und die Standardprogrammierschnittstelle für den DECT - Protokoll - Stack (DAPI) an die Standschnittstelle für den ISDN - Protokoll - Stack (CAPI 2.0) über eine weitere Schicht (CAPI CLIENT) angepaßt wird.

4. Verfahren nach einem der Ansprüche 1 bis 3, **dadurch gekennzeichnet, daß** die auf der mindestens einen angeschlossen Computereinrichtung laufenden Programme Bandbreite anfordern, wobei in der Basisstation die zur Verfügung stehende Bandbreite für die Funkschnittstelle zwischen Basisstation und der mindestens einen angeschlossenen Computereinrichtung festgestellt und unter Berücksichtigung dieser Größe sowie der angeforderten Bandbreite die tatsächlich zur Verfügung gestellte Bandbreite festgelegt wird (CAPI SERVER), und wobei entweder die Übertragungsraten von und zu der Basisstation (FP) unabhängig voneinander angepaßt werden, oder für beide Richtungen die gleiche Bandbreite zur Verfügung gestellt wird, und wobei die Bandbreite durch Kanalbündelung angepaßt wird.

5. Verfahren nach Anspruch einem der Ansprüche 1 bis 4, **dadurch gekennzeichnet, daß** Daten von einer Computereinrichtung zu einer anderen Computereinrichtung entweder direkt unter Umgehung der Basisstation oder indirekt unter Einbeziehung der Basisstation (FP) aber unter Umgehung der digitalen Schnittstelle übertragen werden.

6. Basisstation (FP) zur drahtlosen Anbindung über Funk von mehreren Endgeräten (PP), von denen mindestens eine, vorzugsweise mehrere Computereinrichtungen sind, an eine Schnittstelle (BRA/BPA) eines Telefon- oder Datennetzes,
wobei die Basisstation eine Schnittstelle zu dem Telefon- oder Datennetz, sowie eine Funkschnittstelle zu den mehreren Endgeräten umfaßt,
wobei die Schnittstelle des Telefon- oder Datennetzes in der Basisstation (FP) vollständig terminiert wird, und
wobei die Funkschnittstelle zwischen der mindestens einen Computereinrichtung und der Basisstation eine Vielzahl von Kanälen aufweist.

7. Basisstation (FP) nach Anspruch 18, **dadurch gekennzeichnet, daß** die Basisstation Einrichtungen (CAPI SERVER) zum Anpassen der Datenübertragungsraten von der Basisstation (FP) zu den Endgeräten (PP) und von den Endgeräten zu der Basisstation an die aktuellen Erfordernissen mittels Kanalbündelung aufweist, wobei die Übertragungsraten von und zu der Basisstation (FP) entweder gleich hoch sind, oder unabhängig voneinander angepaßt werden, wobei die aktuellen Erfordernisse von der zur Verfügung stehenden Bandbreite für die Funkschnittstelle zwischen Basisstation und der mindestens einen angeschlossenen Computereinrichtung sowie der angeforderten Bandbreite abhängen.

8. Basisstation (FP) nach der Anspruch 6 oder 7, **dadurch gekennzeichnet, daß** das Telefon- oder Datennetz, zu dem die Basisstation eine Schnittstelle besitzt, dem ISDN - Standard (Integrated Services Digital Network) entspricht, wobei die Schnittstelle eine S₀-, S_{2M}-, Uₚ₀-, U₂₀₀-, U_{A}- oder eine Uₖ₀ - Schnittstelle ist, wobei auf den ISDN - Protokoll - Stack (ISDN L1, ISDN L2, ISDN L3) eine Standardprogrammierschnittstelle gemäß dem CAPI-Standard, wobei die Funkschnittstelle dem DECT - Standard entspricht und auf den DECT - Protokoll - Stack (PHL, MAC, DLC, NWK) eine weitere Standardprogrammierschnittstelle (DAPI) folgt.

9. PCMCIA - Karte mit Treibersoftware zur Funkanbindung gemäß DECT - Standard einer Computereinrichtung (PP) über eine Basisstation (FP) an eine ISDN - Schnittstelle,
wobei die PCMCIA - Karte Einrichtungen zur Funkkommunikation mit der Basisstation sowie zumindest die DECT - spezifische PHL - und MAC - Schicht zur entsprechenden teilweisen Terminierung des DECT - Protokoll - Stacks aufweist, und
wobei die Treibersoftware die nicht in der PCMCIA - Karte terminierten Schichten, vorzugsweise die DLC - und die NWK - Schicht, zur entsprechenden vollständigen Terminierung des DECT - Protokoll - Stacks umfaßt,
wobei weder PCMCIA - Karte noch Treibersoftware Mittel zur Terminierung des B - Kanals der ISDN - Schnittstelle aufweisen,
wobei die Treibersoftware ferner eine Standardprogrammierschnittstelle für die DECT - Funkschnittstelle (DAPI), sowie eine CAPI CLIENT - Schicht und eine Standardprogrammierschnittstelle (CAPI 2.0) für ISDN - Schnittstellen umfaßt,
wobei die CAPI CLIENT - Schicht die Kommunikation mit der Basisstation verwaltet und zur Kommunikation einer entsprechenden CAPI SERVER - Schicht in der Basisstation dient, die selbst mehrere Endgeräte verwalten kann.

10. System zur drahtlosen Anbindung über Funk von mehreren Endgeräten (PP), von denen mindestens eines eine Computereinrichtung ist, über eine Basisstation (FP) an eine digitale Schnittstelle (BRA/BPA) eines Telefon- oder Datennetzes, **dadurch gekennzeichnet, daß**
Einrichtungen vorgesehen sind, um die Schnittstelle des Telefon- oder Datennetzes in der Basisstation (FP) vollständig zu terminieren, und
die Funkschnittstelle zwischen der mindestens einen Computereinrichtung und der Basisstation eine Vielzahl von Kanälen aufweist.
